# FASCICULE DE BREVET EUROPEEN

(11) **EP 0 689 944 B1**
(45) Date de publication et mention de la délivrance du brevet: **09.09.1998**
(21) Numéro de dépôt: 95401159.9
(22) Date de dépôt: 18.05.1995
(51) Int. Cl.: B60B 17/00

(54) **Ecran phonique, son procédé de montage sur une pièce tournante et pièce tournante comportant un tel écran**
Schallschutzschirm, Verfahren zur dessen Montage auf einem drehenden Teil und drehendes Teil mit einem solchen Schirm
Sound-screen, mounting method on turning element and turning element with such a screen

(30) Priorité: 26.05.1994 FR 9406369
(43) Date de publication de la demande: 03.01.1996
(73) Titulaire: LE JOINT FRANCAIS, Société en Nom Collectif, F-75008 Paris (FR)
(72) Inventeur: Beaubatie, Laurent, F-94700 Maisons-Alfort (FR); Le Bian, Robert, F-95400 Arnouville-les-Gonesse (FR)
(74) Mandataire: Hurwic, Aleksander

(56) Documents cités:
- EP-A- 0 065 157
- DE-A- 3 328 519
- FR-A- 1 025 375
- FR-A- 2 371 305
- US-A- 1 689 052

## Description

La présente invention se rapporte principalement à un écran phonique pour pièce tournante notamment pour roues de véhicules de chemin de fer, à un procédé de montage de l'écran phonique sur la pièce tournante et à une pièce tournante, notamment à une roue pour véhicules de chemin de fer munie d'un tel écran.

Les pièces tournantes, notamment les pièces rigides roulant sur un chemin de roulement, comme par exemple les roues des véhicules de chemin de fer, engendrent des nuisances sonores qui sont de moins en moins bien acceptées. La toile d'une roue de chemin de fer vibre dans les fréquences acoustiques lorsqu'elle est excité par les vibrations résultant des imperfections du contact entre la roue et le rail et rayonne des ondes acoustiques d'amplitude importante. Pour limiter les nuisances qui en résultent on a proposé de fixer par des vis et des écrous un écran phonique sur les toiles des roues pour véhicules de chemin de fer. La réduction des nuisances assurée par ces écrans est insuffisante car les vibrations du voile sont transmises à l'écran phonique par les vis de fixation et par les surfaces de contact périphériques entre l'écran phonique et la roue. A son tour, l'écran phonique devient une surface rayonnant des ondes acoustiques indésirables.

C'est, par conséquent, un but de la présente invention d'offrir un écran phonique pour pièce tournante, notamment pour roues de véhicules de chemin de fer, assurant une isolation acoustique poussée.

C'est, également, un but de la présente invention d'offrir de tels écrans phoniques isolés des vibrations de la pièce rayonnant les ondes acoustiques à éliminer.

C'est aussi un but de la présente invention d'offrir un écran phonique fixé de manière sûre et rapide sur la pièce tournante à isoler acoustiquement.

Ces buts sont atteints selon l'invention par un écran phonique pour pièce tournante comportant au moins un joint de fixation clipsable, de préférence périphérique, réalisé en un matériau assurant un amortissement important des vibrations ou tout au moins empêchant leur transmission à l'écran phonique. Avantageusement, ce joint comporte une gorge de réception d'une clé de verrouillage rendant particulièrement sûre la fixation de l'écran phonique. On évite ainsi de devoir recourir à des moyens de fixation complémentaires notamment à des vis risquant de transmettre des vibrations à l'écran phonique.

Les joints clipsables assurent simultanément la fixation de l'écran sur la pièce tournante, notamment sur la roue pour véhicules de chemin de fer, et filtrent les vibrations de la roue transmises à l'écran phonique, l'amortissement correspondant à ce filtrage étant particulièrement efficace pour le spectre audible. La ou les paroi(s) de l'écran améliore(nt) la fixation de l'écran en repoussant le ou les joint(s) sur les moyens de retenue de la pièce tournante.

L'invention a principalement pour objet un écran phonique pour pièce tournante comportant une paroi d'isolation phonique et des moyens de fixation de la paroi sur la pièce tournante, caractérisé en ce que les moyens de fixation sont constitués par un ou plusieurs joint(s) en un matériau transmettant peu de vibrations, clipsables sur une saillie et/ou une gorge radiale de la pièce tournante et comportent des moyens de réception d'un organe d'appui de la paroi radiale repoussant le joint sur la saillie radiale ou dans la gorge radiale.

Selon un mode de réalisation préféré de l'invention, le ou les joints est (sont) réalisé(s) en un matériau viscoélastique assurant l'amortissement des vibrations, de préférence en élastomère (revendication 2).

Selon d'autres modes de réalisation préférés définis dans les revendications dépendants à 11:
- l'élastomère du ou des joint(s) a une dureté comprise entre 40 Shore A et 70 Shore A, de préférence entre 50 Shore A et 60 Shore A;
- l'écran comporte des moyens de verrouillage du ou des joint(s) dans la condition clipsée sur la pièce tournante;
- le ou les joint(s) comporte(nt) une gorge de réception d'une clé annulaire de verrouillage en un matériau plus rigide que le matériau du ou des joint(s);
- le ou les joint(s) comporte(nt) au moins un tube s'étendant sur 360° qui, en augmentant la souplesse du ou des joints, améliore le filtrage des basses fréquences acoustiques;
- l'écran comporte une paroi radiale en forme de disque ou de calotte, notamment sphérique, et un unique joint périphérique;
- l'écran comporte une paroi radiale annulaire fixée sur la pièce tournante par un joint périphérique et par un joint interne concentriques;
- l'écran comporte en outre une paroi axiale repoussant le joint sur la saillie radiale ou dans la gorge radiale;
- la ou les paroi(s) comporte(nt) une structure laminaire comprenant deux couches rigides externes, notamment des tôles, assemblées par un liant viscoélastique, notamment de l'élastomère;
- l'écran comporte entre l'élément tournant et la paroi radiale un matériau absorbant les ondes acoustiques, notamment une mousse.

L'invention a également pour objet une pièce tournante comportant au moins un écran selon l'une des revendications 1 à 11.

L'invention peut avantageusement être utilisée dans une roue pour véhicules de chemin de fer.

Selon un mode de réalisation préféré, ladite roue pour véhicules de chemin de fer comporte un écran recouvrant chacune des deux faces de la toile de la roue.

L'invention a également pour objet un procédé de montage d'un écran phonique selon le mode de réalisation comportant une clé annulaire de verrouillage, caractérisé en ce qu'il comporte une étape consistant à clipser au moins un joint sur une pièce tournante et une étape consistant à faire pénétrer à force une clé de verrouillage dans une gorge de réception du joint.

L'invention sera mieux comprise au moyen de la description ci-après et des figures annexées données comme des exemples non limitatifs et sur lesquelles :
- la figure 1 est une vue en coupe d'une roue de véhicule de chemin de fer de type connu ;
- la figure 2 est une vue en coupe d'un roulement à billes comportant deux écrans phoniques selon la présente invention ;
- la figure 3 est une vue en perspective d'une roue de véhicule de chemin de fer comportant un écran phonique selon la présente invention ;
- la figure 4 est une vue schématique en perspective d'une roue de chemin de fer comportant un écran phonique selon la présente invention recouvrant l'essieu de la roue ;
- la figure 5 est une vue en coupe d'un premier exemple de réalisation d'écran phonique illustré sur la figure 3 ;
- la figure 6 est une vue en coupe dans un deuxième exemple de réalisation d'écran phonique de la figure 3.
- la figure 7 est une vue en coupe d'une variante de réalisation d'écran phonique selon l'invention.

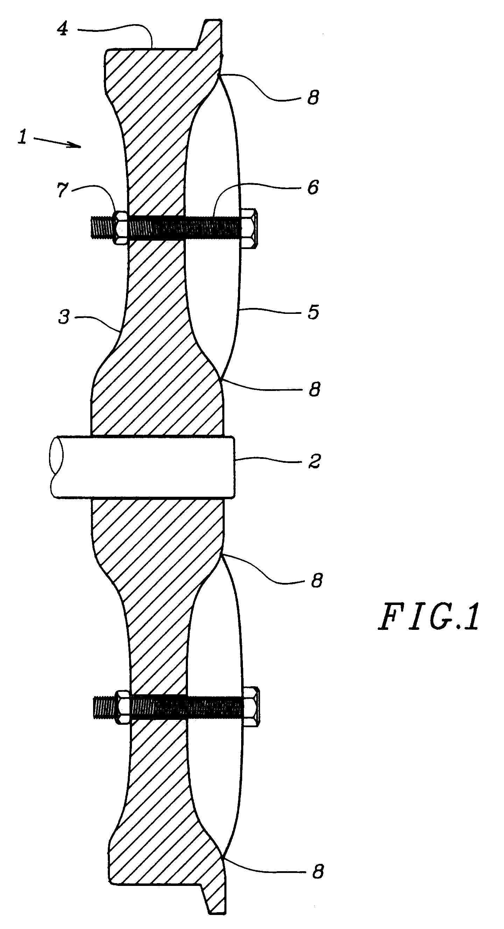

Sur les figures 1 à 7, on a utilisé les mêmes références pour désigner les mêmes éléments.

Sur la figure 1, on peut voir une roue 1 pour véhicule de chemin de fer dont un essieu 2 est relié par une toile 3 à un chemin de roulement périphérique 4. Lors de la rotation de la roue 1, la toile 3 forme la principale surface rayonnante transmettant à l'air ambiant les ondes acoustiques. Ainsi, pour diminuer le niveau sonore engendré par le passage d'un train, la roue 1 comporte un écran phonique 5 annulaire recouvrant la toile 3 sur sensiblement toute sa surface, L'écran 5 est fixé à la toile 3 par des vis 6 munies d'écrous 7. Les vis 6 ainsi que des cercles 8 sur lesquels s'établit le contact entre la roue 1 et l'écran 5 assurent la transmission des vibrations de la roue à l'écran phonique 5 qui à son tour devient une surface rayonnante. Ce mode de fixation compromet donc en grande partie l'efficacité de l'isolation phonique procurée par l'écran 5.

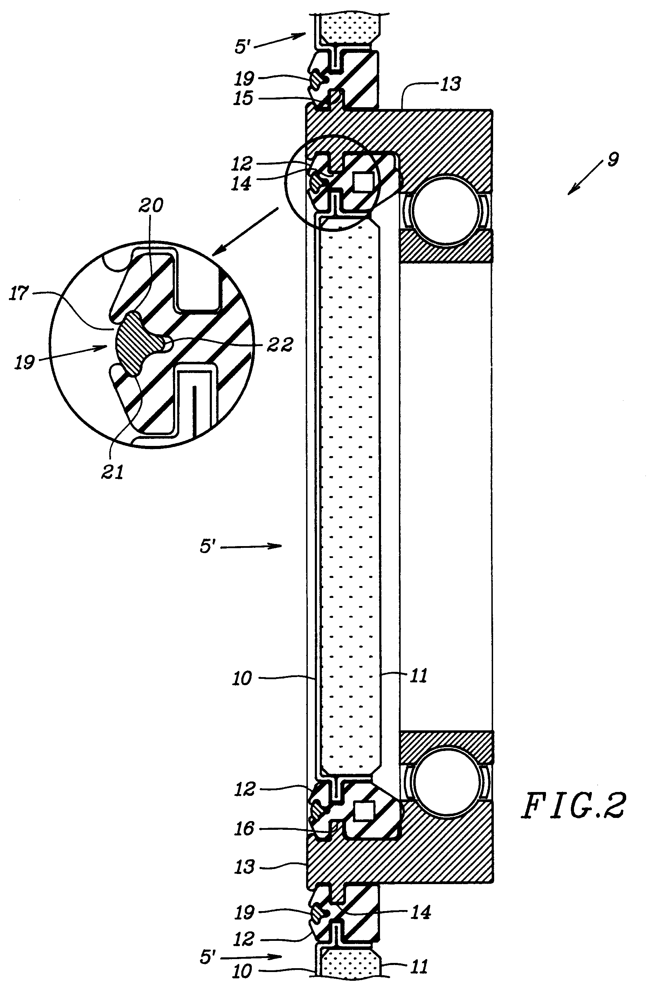

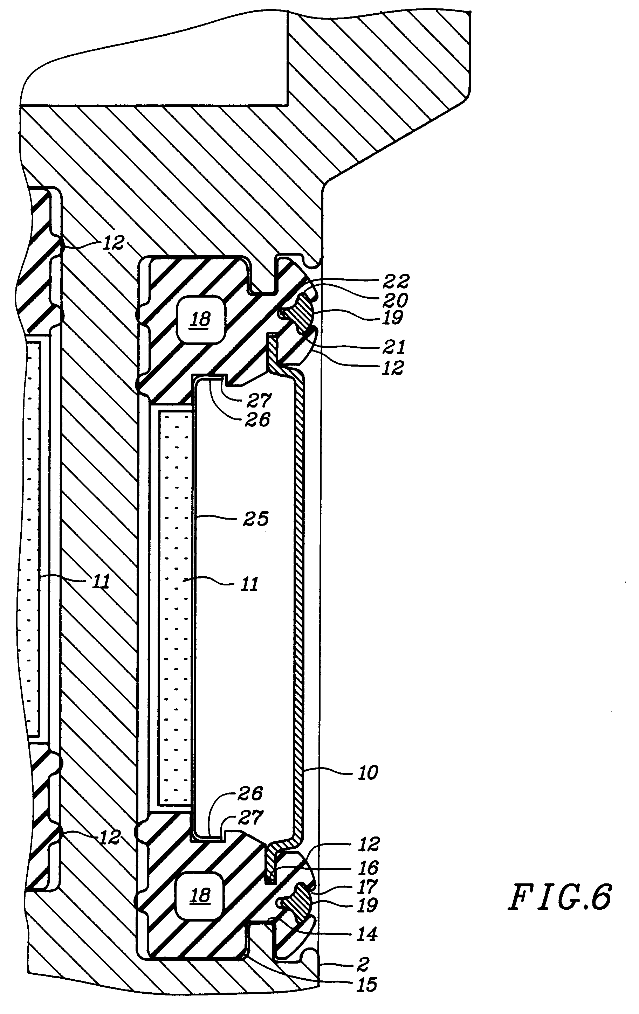

Sur la figure 2, on peut voir un roulement à billes 9 comportant sur une de ses faces principales un écran phonique 5' central en forme de disque et un écran phonique 5' annulaire périphérique. Chacun des écrans phoniques 5' comporte une paroi 10, par exemple en tôle métallique, ou avantageusement comme il sera expliqué plus en détails en référence à la figure 6, en une structure laminaire assurant l'isolation acoustique, garnie du côté du roulement 9 d'un matériau 11 isolant du bruit et/ou avantageusement absorbant les ondes acoustiques, notamment en mousse. L'absorption d'une partie du bruit émis par le roulement 9 ou par les pièces qu'il supporte par dissipation viscothermique réduit sensiblement le temps de réverbération des ondes acoustiques dans une éventuelle cavité délimitée par ces pièces. Selon l'invention, le ou les écrans phoniques 5' sont fixés sur la pièce tournante 9 par des joints clipsables, notamment à clé 12, centraux et/ou périphériques.

Le roulement à billes 9 selon l'invention comporte un rebord axial 13 définissant une cavité de réception de l'écran phonique 5', muni sur au moins une de ses faces d'une saillie radiale 14 de préférence de section rectangulaire. L'extrémité du rebord 13 peut également être munie d'une saillie radiale non représentée. Le joint à clé 12 comporte une première gorge radiale 15 de réception de la saillie radiale 14 du rebord 13 et une seconde gorge radiale 16, avantageusement opposée à la première gorge radiale 15, de réception d'un élément de fixation de l'écran phonique 5', par exemple du bord de la paroi 10. La face externe du joint 12 est munie d'une cavité ou gorge axiale 17 de réception d'une clé de verrouillage, ayant avantageusement une section en croix. Le joint peut comporter des tubes 18, c'est-à-dire des évidements de section variée s'étendant sur 360°. Les tubes 18 en augmentant la souplesse du joint 12 améliorent l'absorption des vibrations mécaniques par le joint et améliorent l'isolation phonique procurée par l' écran 5'.

Le joint à clé 12 est réalisé en une matière élastique ne transmettant pas les vibrations et permettant, compte tenu de sa géométrie et notamment de la présence de la cavité axiale 17, une déformation élastique assurant la mise en place par clipsage, d'un joint 12 muni de la paroi 10. Lorsque le joint 12 et la paroi 10 sont en place, on fait pénétrer à force dans la cavité axiale 17 une clé circulaire rigide 19 comportant deux saillies radiales 20 et 21 pénétrant dans les bras en croix de la cavité 17 qui en assurent le blocage. Avantageusement, la clé 19 comporte également une saillie axiale 22 assurant le guidage de la clé 19 lors de la pénétration dans la cavité axiale 17.

En empêchant la déformation élastique du joint 12, la clé rigide 19 assure le verrouillage de l'écran phonique 5'. Dans le cas d'un écran en forme de disque, un unique joint à clé périphérique assure le maintien de l'écran phonique. Dans le cas d'un écran annulaire, un joint à clé interne et un joint à clé périphérique assurent le maintien de l'écran phonique.

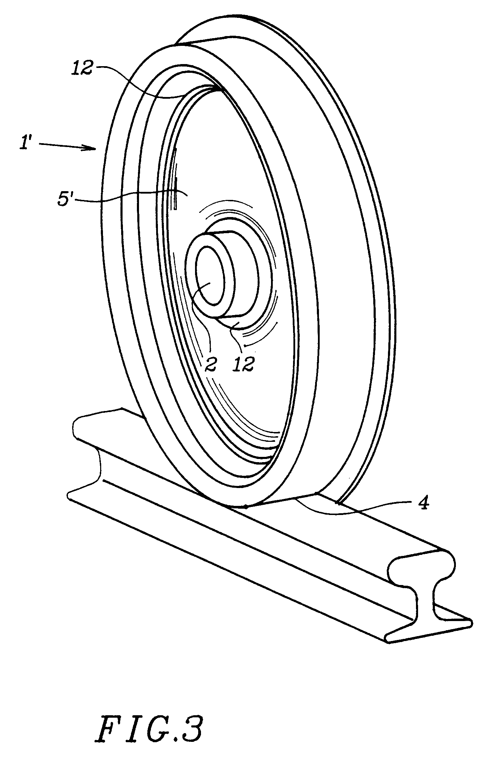

Sur la figure 3, on peut voir un exemple de roue 1' pour véhicules de chemin de fer selon l'invention munie d'un écran phonique annulaire 5' recouvrant sensiblement la toile de la roue et comportant un premier joint à clé 12 interne au niveau de l'essieu 2 et un joint à clé périphérique 12 du côté de la bande de roulement 4.

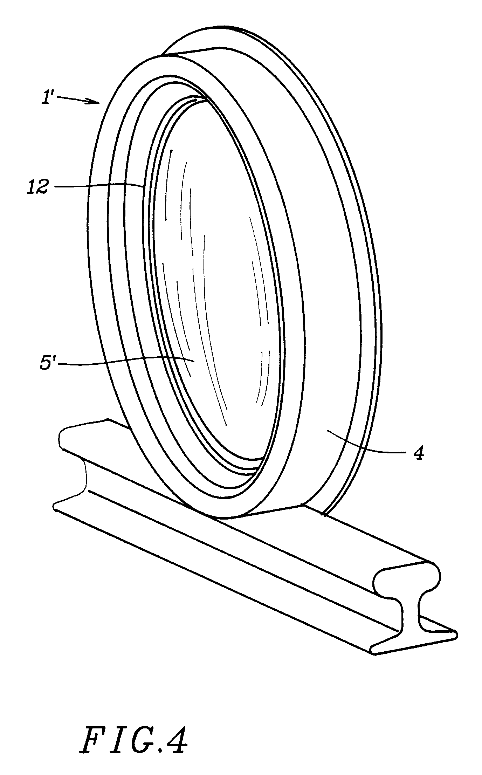

Sur la figure 4, on peut voir un exemple de roue 1' selon la présente invention comportant un écran phonique 5' en forme de disque ou de calotte sphérique recouvrant la toile de la roue ainsi que l'essieu (non visible sur cette figure). L'écran phonique 5' est fixé par un unique joint à clé 12 périphérique.

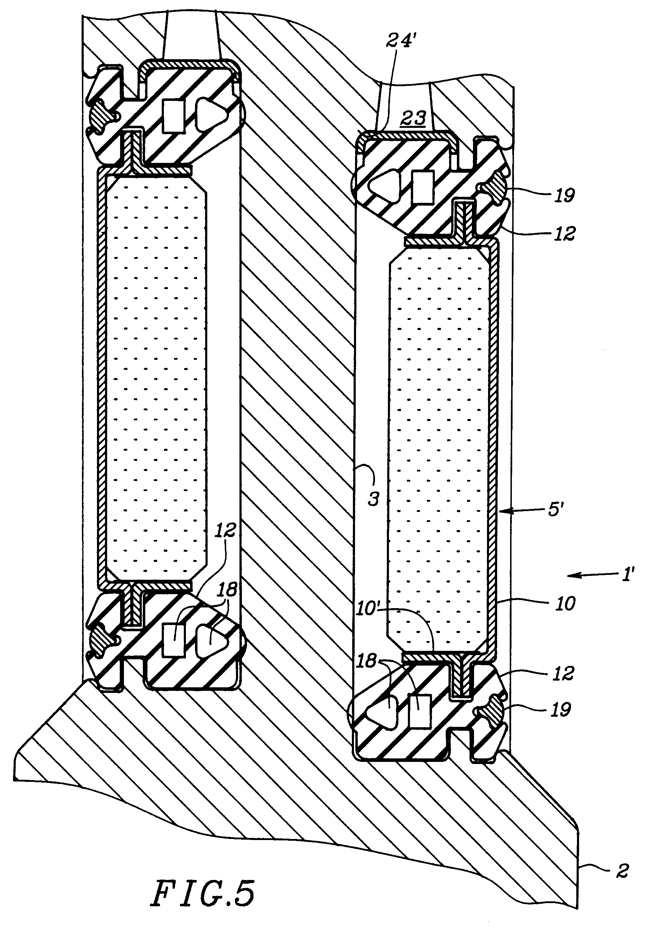

Sur la figure 5, on peut voir un exemple de réalisation d'une roue 1' selon la présente invention comportant de chaque côté de la toile 3 un écran phonique annulaire 5' maintenu axialement par deux joints à clé 12. Dans l'exemple de la figure 5, chaque joint 12 comporte au niveau d'un talon situé du côté de la toile 3 un tube 18 de section triangulaire et un tube 18 de section rectangulaire. Les tubes 18 en augmentant la souplesse du joint 12 améliorent l'absorption des vibrations mécaniques par le joint et augmentent l'isolation phonique procurée par les écrans 5', notamment pour les basses fréquences acoustiques. Chaque écran 5' comporte une paroi externe 10 avantageusement complétée au côté de la toile 3 par un disque 11 en mousse absorbante. Les bords radiaux de la paroi 10 pénètrent dans les gorges radiales 16 du joint 12. Avantageusement, une paroi axiale cylindrique 10', de préférence prenant appui sur le disque 11 en mousse isolante, comprime le joint 12 en direction de l'essieu 2 ou de la bande de roulement 4. Dans l'exemple illustré, la paroi axiale 10' comporte un rebord radial pénétrant dans la gorge 16 du joint 12.

Sur la figure 5, on a illustré un exemple de roue comportant une gorge radiale 23 de réception d'un jonc bouchée par une paroi 24, par exemple une tôle en U, qui empêche l'expansion du joint 12 dans la gorge 23.

Sur la figure 6, on peut voir un exemple de réalisation d'un écran phonique 5' selon la présente invention comportant, outre la paroi radiale externe 10, une paroi radiale interne 25 qui lui est parallèle. Avantageusement, les parois 10 et 25 ont des fréquences de coïncidence différentes. La paroi 25 est avantageusement garnie du côté de la toile 3 d'un anneau 11 en matériau absorbant les ondes acoustiques, par exemple en mousse. La paroi 25 présente par exemple une section en U dont chaque barre verticale 26 est en appui dans une gorge radiale 27 de l'un des joints 12. En repoussant radialement les deux joints 12 en vis-à-vis, la paroi interne 25 participe avec la paroi externe 10 au maintien en place de ces joints, et par la suite de l'écran phonique. De plus, la mise en oeuvre de deux parois parallèles permet d'améliorer le filtrage des fréquences acoustiques assurées par l'écran 5'.

Les joints 12 de la figure 6 comportent un tube 18 de section sensiblement carrée.

Il est bien entendu qu'un écran 5' dépourvu de tout anneau 11 en matériau absorbant ne sort pas du cadre de la présente invention.

De même, un écran 5' comportant un premier anneau en matériau absorbant 11 disposé entre la paroi interne 25 et la toile 3 de la roue 1' et un second anneau en matériau absorbant disposé entre les parois 25 et 10 ne sort pas du cadre de la présente invention.

Les joints 12 sont par exemple réalisés en élastomère, notamment en caoutchouc dont la dureté est comprise entre 40 Shore A et 70 Shore A de préférence entre 50 Shore A et 60 Shore A avantageusement égale à 60 Shore A. Le matériau isolant 11 est par exemple constitué par une mousse alvéolaire à cellules ouvertes, avantageusement une mousse amortie.

Les parois 25 et 10 sont réalisées par exemple en un matériau plastique, en un matériau composite, en tôle métallique ou, avantageusement en tôle composite dite tôle sandwich dont l'épaisseur est comprise entre 0,5 mm et 5 mm. Par exemple, la paroi 25 est constituée par une tôle sandwich de 1 mm d'épaisseur alors que la paroi externe 10 est formée par une tôle sandwich de 2 mm d'épaisseur, ce qui lui permet d'assurer un excellent filtrage en fréquence et une excellente résistance aux chocs mécaniques, notamment aux projections de cailloux formant le ballast. Les tôles sandwich sont formées par deux tôles métalliques, par exemple en acier, assemblées par un élément de liaison viscoélastique.

La clé 19 est réalisée en un matériau rigide, par exemple en caoutchouc ayant une dureté égale à 80 Shore A.

Un prototype de roue illustré sur la figure 5 a permis d'obtenir un indice d'affaiblissement égal à 6 dB/octave.

Un prototype de roue illustré sur la figure 6 a permis d'obtenir un indice d'affaiblissement égal à 12 dB/octave.

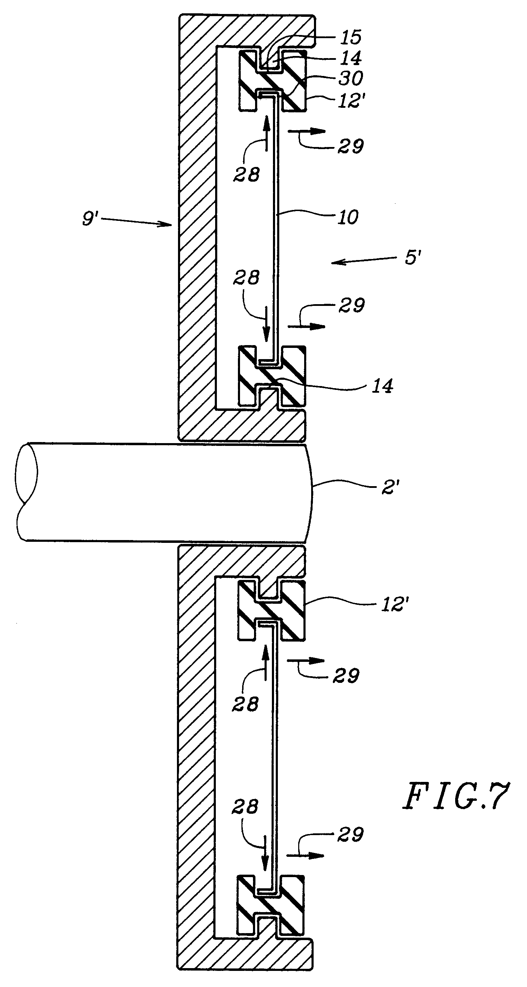

Un verrouillage particulièrement efficace est assuré par les joints 12 à clés. Toutefois, la présente invention s'étend à tout joint clipsable en matériau ne transmettant pas les vibrations, de préférence en matériau souple absorbant les vibrations, repoussé radialement par un écran phonique 5', notamment plan ou formant une voûte, par exemple par une paroi radiale 10 et/ou 25 avantageusement complétée par une paroi axiale 10'. Un exemple d'un écran simplifié selon la présente invention est illustré sur la figure 7. Le dispositif 9' tournant autour de l'axe 2' comporte des cavités de réception d'un écran phonique annulaire 5', les parois axiales de la cavité étant munies de saillies radiales 14 disposées en vis-à-vis. Une gorge 15 de chacun des joints 12' circulaires ayant une section en H reçoit une saillie radiale 14. Les gorges 30 opposées des joints 12' disposées en vis-à-vis reçoivent un rebord radial, ou, comme illustré, axial, d'une paroi 10 qui en exerçant une force radiale selon la flèche 28 repousse les joints 12' vers leurs saillies respectives 14 et empêche ainsi une libération axiale selon les flèches 29 de l'écran 5'.

La présente invention s'applique notamment à l'isolation phonique des pièces mécaniques tournantes.

La présente invention s'applique principalement à l'isolation acoustique des roues pour véhicules de chemin de fer et à la diminution de bruits générés par des véhicules de chemin de fer, notamment par les motrices et les wagons.

## Revendications

1. Ecran phonique pour pièce tournante comportant une paroi d'isolation phonique (10, 25) et des moyens de fixation de la paroi (10, 25) sur la pièce tournante, caractérisé en ce que les moyens de fixation sont constitués par un ou plusieurs joint(s) en un matériau transmettant peu de vibrations, clipsables sur une saillie (14) et/ou une gorge radiale de la pièce tournante et comportent des moyens de réception (16) d'un organe d'appui de la paroi radiale (10, 25) repoussant le joint (12, 12') sur la saillie radiale (14) ou dans la gorge radiale.

2. Ecran selon la revendication 1, caractérisé en ce que le ou les joints est (sont) réalisé(s) en un matériau viscoélastique assurant l'amortissement des vibrations, de préférence en élastomère.

3. Ecran selon la revendication 2, caractérisé en ce que l'élastomère du ou des joint(s) (12, 12') à une dureté comprise entre 40 Shore A et 70 Shore A, de préférence entre 50 Shore A et 60 Shore A.

4. Ecran selon l'une quelconque des revendications précédentes, caractérisé en ce qu'il comporte des moyens (19) de verrouillage du ou des joint(s) dans la condition clipsée sur la pièce tournante.

5. Ecran selon la revendication 4, caractérisé en ce que le ou les joint(s) (12, 12') comporte(nt) une gorge (17) de réception d'une clé annulaire de verrouillage (19) en un matériau plus rigide que le matériau du ou des joint(s) (12, 12').

6. Ecran selon l'une quelconque des revendications précédentes, caractérisé en ce que le ou les joint(s) comporte(nt) au moins un tube (18) s'étendant sur 360° qui, en augmentant la souplesse du ou des joints, améliore le filtrage des basses fréquences acoustiques.

7. Ecran selon l'une quelconque des revendications précédentes, caractérisé en ce qu'il comporte une paroi radiale (10, 25) en forme de disque ou de calotte, notamment sphérique, et en ce qu'il comporte un unique joint (12, 12') périphérique.

8. Ecran selon l'une quelconque des revendications 1 à 6, caractérisé en ce qu'il comporte une paroi radiale (10, 25) annulaire fixée sur la pièce tournante par un joint périphérique (12, 12') et par un joint interne (12, 12') concentriques.

9. Ecran selon l'une quelconque des revendications précédentes, caractérisé en ce qu'il comporte en outre une paroi axiale (10') repoussant le joint (12, 12') sur la saillie radiale (14) ou dans la gorge radiale.

10. Ecran selon l'une quelconque des revendications précédentes, caractérisé en ce que la ou les paroi(s) comporte(nt) une structure laminaire comprenant deux couches rigides externes, notamment des tôles, assemblées par un liant viscoélastique, notamment de l'élastomère.

11. Ecran selon l'une quelconque des revendications précédentes, caractérisé en ce qu'il comporte entre l'élément tournant et la paroi radiale (10, 25) un matériau (11) absorbant les ondes acoustiques, notamment une mousse.

12. Pièce tournante caractérisée en ce qu'elle comporte au moins un écran selon l'une quelconque des revendications précédentes.

13. Pièce tournante selon la revendication 12, caractérisée en ce que ladite pièce est une roue pour véhicules de chemin de fer.

14. Roue pour véhicules de chemin de fer selon la revendication 13, caractérisée en ce qu'elle comporte un écran selon l'une quelconque des revendications 1 à 11, recouvrant chacune des deux faces de la toile (3) de la roue.

15. Procédé de montage d'un écran phonique selon la revendication 5 ou l'une quelconque des revendications 6 à 11 en combinaison avec la revendication 5, caractérisé en ce qu'il comporte une étape consistant à clipser au moins un joint (12, 12') sur une pièce tournante et une étape consistant à faire pénétrer à force une clé de verrouillage (19) dans la gorge de réception du joint (12, 12').

## Claims

1. A sound screen for a rotating part comprising a sound insulating wall (10, 25) and means of mounting the wall (10, 25) on the rotating part, characterised in that the fixing means are constituted by one or more gaskets of a material which is a poor conductor of vibrations, said gaskets being adapted to be clipped onto a projecting portion (14) and/or a radial groove in the rotating part and comprising means (16) of receiving a member for supporting the radial wall (10, 25) which pushes back the gasket (12, 12') onto the radial projection (14) or into the radial groove.

2. A screen according to claim 1, characterised in that the gasket(s) is(are) made from a visco-elastic material which deadens vibrations and which is preferably an elastomer.

3. A screen according to claim 2, characterised in that the elastomer of the gasket(s) (12, 12') has a hardness comprised between 40 Shore A and 70 Shore A and preferably between 50 Shore A and 60 Shore A.

4. A screen according to any one of the preceding claims, characterised in that it comprises means (19) for locking the gasket(s) in the position in which it is clipped onto the rotating part.

5. A screen according to claim 4, characterised in that the gasket(s) (12, 12') comprise(s) a groove (17) for receiving a annular locking key (19) of a material which is more rigid than the material of the gasket(s) (12, 12;).

6. A screen according to any one of the preceding claims, characterised in that the gasket(s) comprise(s) at least one tube (18) extending over 360° and which, enhancing the flexibility of the gasket(s), improves the filtering of low sound frequencies.

7. A screen according to any one of the preceding claims, characterised in that it comprises a radial wall (10, 25), particularly in the form of a spherical disc or cup and in that it comprises a peripheral gasket (12, 12').

8. A screen according to any one of claims 1 to 6, characterised in that it comprises a radial annular wall (10, 25) fixed on the rotating part by a peripheral gasket (12, 12') and by an inner gasket (12, 12'), said gaskets being concentric.

9. A screen according to any one of the preceding claims, characterised in that it comprises furthermore an axial wall (10') which pushes the gasket (12, 12') back onto the radial projection (14) or into the radial groove.

10. A screen according to any one of the preceding claims, characterised in that the wall(s) comprise(s) a laminar structure consisting of two rigid outer layers, particularly metal plates, assembled by a visco-elastic binder, particularly an elastomer.

11. A screen according to any one of the preceding claims, characterised in that it comprises between the rotating element and the radial wall (10, 25) a material (11) which absorbs sound waves and which is in particular a foam.

12. A rotating part characterised in that it comprises at least one screen according to anyone of the preceding claims.

13. A rotating part according to claim 12, characterised in that the said part is a wheel for railway vehicles.

14. A wheel for railway vehicles according to claim 13, characterised in that it comprises a screen according to any one of claims 1 to 11, covering each of the two faces of the wheel disc (3).

15. A method of mounting a sound screen according claim 5 or any one of claims 6 to 11, in conjunction with claim 5, characterised in that it comprises a stage which consists of clipping at least one gasket (12, 12') onto a rotating part and a stage consisting of causing a locking key (19) to penetrate by force into the receiving groove in the gasket (12, 12').

## Patentansprüche

1. Schallabschirmung für ein drehendes Teil mit einer Wand (10, 25) zur Schallisolierung und einer Einrichtung zur Befestigung der Wand (10, 25) an dem drehenden Teil, dadurch gekennzeichnet, daß die Befestigungseinrichtung aus einer Verbindungseinrichtung/mehreren Verbindungseinrichtungen aus einem Material, das wenig Vibrationen überträgt, gebildet ist, an einen Vorsprung (14) und/oder in eine radiale Aussparung des drehenden Teils klemmbar ist und eine Einrichtung (16) zur Aufnahme eines Stützteils der radialen Wand (10, 25) aufweist, das die Verbindungseinrichtung/Verbindungseinrichtungen (12, 12') auf den radialen Vorsprung (14) oder in die radiale Aussparung drückt/drücken.

2. Abschirmung nach Anspruch 1, dadurch gekennzeichnet, daß die Verbindungseinrichtung/Verbindungseinrichtungen aus einem schwingungsdämpfenden viskoelastischen Material, vorzugsweise aus einem Elastomer, hergestellt ist/sind.

3. Abschirmung nach Anspruch 2, dadurch gekennzeichnet, daß das Elastomer der Verbindungseinrichtung/Verbindungseinrichtungen (12, 12') eine Härte zwischen 40 Shore A und 70 Shore A, vorzugsweise zwischen 50 Shore A und 60 Shore A, aufweist.

4. Abschirmung nach einem der vorhergehenden Ansprüche, gekennzeichnet durch eine Einrichtung (19) zur Verriegelung der Verbindungseinrichtung/Verbindungseinrichtungen in einem an das drehende Teil geklemmten Zustand.

5. Abschirmung nach Anspruch 4, dadurch gekennzeichnet, daß die Verbindungseinrichtung/Verbindungseinrichtungen (12, 12') eine Aussparung (17) zur Aufnahme eines ringförmigen Verriegelungsschlüssels (19) aus einem Material, das härter ist als das Material der Verbindungseinrichtung/Verbindungseinrichtungen (12, 12'), aufweist/aufweisen.

6. Abschirmung nach einem der vorhergehenden Ansprüche, dadurch gekennzeichnet, daß die Verbindungseinrichtung/Verbindungseinrichtungen wenigstens einen sich über 360° erstreckenden Kanal (18) aufweist/aufweisen, der durch eine Erhöhung der Flexibilität der Verbindungseinrichtung/Verbindungseinrichtungen die Herausfiltrierung tiefer Schallfrequenzen verbessert.

7. Abschirmung nach einem der vorhergehenden Ansprüche, gekennzeichnet durch eine insbesondere kugelförmige radiale Wand (10, 25) in Form einer Scheibe oder eines Deckels und durch eine einzige peripherische Verbindungseinrichtung (12, 12').

8. Abschirmung nach einem der Ansprüche 1 bis 6, gekennzeichnet durch eine ringförmige radiale Wand (10, 25), die durch eine peripherische Verbindungseinrichtung (12, 12') und durch eine konzentrische innere Verbindungseinrichtung (12, 12') an dem drehenden Teil befestigt ist.

9. Abschirmung nach einem der vorhergehenden Ansprüche, gekennzeichnet durch ferner eine axiale Wand (10'), die die Verbindungseinrichtung (12, 12') auf den radialen Vorsprung (14) oder in die radiale Vertiefung drückt.

10. Abschirmung nach einem der vorhergehenden Ansprüche, dadurch gekennzeichnet, daß die Wand/die Wände einen Schichtaufbau mit zwei starren äußeren Schichten, insbesondere Blechen, aufweist/aufweisen, die mit einem viskoelastischen Bindemittel, insbesondere einem Elastomer, zusammengefügt sind.

11. Abschirmung nach einem der vorhergehenden Ansprüche, gekennzeichnet durch ein Schallwellen-absorbierendes Material, insbesondere Schaumstoff, zwischen dem drehenden Teil und der radialen Wand (10, 25).

12. Drehendes Teil, gekennzeichnet durch wenigstens eine Abschirmung nach einem der vorhergehenden Ansprüche.

13. Drehendes Teil nach Anspruch 12, dadurch gekennzeichnet, daß dieses Teil ein Rad für ein Eisenbahnfahrzeug ist.

14. Rad für ein Eisenbahnfahrzeug nach Anspruch 13, gekennzeichnet durch eine Abschirmung nach einem der Ansprüche 1 bis 11, die jede der zwei Seitenflächen der Karkassenwand (3) des Rades abdeckt.

15. Verfahren zur Montage einer Schallabschirmung nach Anspruch 5 oder einem der Ansprüche 6 bis 11 in Kombination mit Anspruch 5, gekennzeichnet durch einen Schritt bestehend aus dem Klemmen wenigstens einer Verbindungseinrichtung (12, 12') an ein drehendes Teil und einen Schritt bestehend aus dem Drücken eines Verriegelungsschlüssels (19) in die Aufnahmeaussparung der Verbindungseinrichtung (12, 12').
